# EUROPÄISCHE PATENTANMELDUNG

(11) **EP 1 953 096 A1**
(43) Veröffentlichungstag der Anmeldung: **06.08.2008**
(21) Anmeldenummer: 07012884.8
(22) Anmeldetag: 01.07.2007
(51) Int. Cl.: B65G 25/02, B65G 63/02

(54) **Verschubeinrichtung**

(30) Priorität: 23.01.2007 DE 102007004281
(71) Anmelder: Bermüller, Wolfgang, 81927 München (DE)
(72) Erfinder: Bermüller, Wolfgang, 81927 München (DE)
(74) Vertreter: Säger, Manfred

(57) **Zusammenfassung**

Eine Verschubeinrichtung zum Transport von aufgesetzten Lasten, z.B. Befülleinrichtungen wie Container od. dgl., weist einen Gleitschuh, der auf seiner Unterseite zum Abstützen eben ausgebildet und auf seiner Oberseite mit zumindest einer sich in Längsrichtung erstreckenden, ebenen Laufbahn und zumindest einer parallel dazu verlaufenden, an zwei Stellen mittels je zweier Rampen höhenversetzten Laufbahn versehen ist, ferner eine diesen Gleitschuh im Querschnitt als umgekehrtes U übergreifende Haube, deren beide U-Schenkel-Enden ebenfalls zum Abstützen auf dem Boden ausgebildet sind und deren als U-Steg ausgebildete Oberseite zur Aufnahme der Befülleinrichtung ausgebildet ist, desweiteren die Haube an ihren beiden Enden je einen Rollenbock, dessen Rollen quer zu der Längsrichtung zwischen der zumindest einen ebenen und der zumindest einen höhenversetzten Laufbahn verschiebbar an der Haube festgelegt ist, und schliesslich einen Hubzylinder auf, dessen eines Ende an der Haube und dessen anderes Ende an dem Gleitschuh angreift.

## Beschreibung

Die Erfindung betrifft eine gattungsgemässe Verschubeinrichtung.

Eine Verschubeinrichtung zum quer zur Transportrichtung erfolgenden Auf- und Abladen von auf einer Transporteinrichtung, z. B. Waggon befindlichen Befülleinrichtung ist bekannt (DE-19501543-C1) und hat sich bewährt. Hierbei wird als Befülleinrichtung ein Container verwendet, der umgebaut sein muss und zwei zueinander parallel sowie voneinander beabstandete nach unten offene Kanäle auf seiner Unterseite aufweist. In diesen Kanal kann ein Umsetzgerät mit eigenem Antrieb hineinfahren und dann mittels einer ebenfalls vorhandenen Hubeinrichtung den Container anheben. Im angehobenen Zustand kann dann der Container quer zu dessen Transportrichtung auf der Transporteinrichtung von dem Umsetzgerät bewegt werden.

Von Nachteil bei dieser bekannten Einrichtung ist die Vielzahl der Hydraulik-Verbindungsleitungen zu dem als Betriebshof- und/oder Strassenfahrzeug ausgebildeten und als Transporteinrichtung dienenden Lastkraftwagen, die das Bewegen der Container mit der Verschubeinrichtung umständlich macht und dieses an den Lastkraftwagen bindet, was den Betriebsaufwand erhöht.

Der Erfindung liegt daher die Aufgabe zugrunde, eine gattungsgemässe Einrichtung der eingangs angegebenen Art für bekannte Container jeglicher Grösse, ohne die Notwendigkeit diese umzubauen zu müssen, vorzuschlagen, die einfacher und kostengünstiger ausgebildet ist und mit dem das Bewegen der Container einfacher und weniger umständlich sowie wirtschaftlicher und störunanfälliger im Betrieb wird.

Diese Aufgabe wird erfindungsgemäss durch den Gegenstand des Hauptanspruchs, also durch eine Verschubeinrichtung zum Transport von aufgesetzten Befülleinrichtungen wie Container od. dgl. gelöst, wobei sie einen Gleitschuh (20), der auf seiner Unterseite zum Abstützen eben ausgebildet und auf seiner Oberseite mit zumindest einer sich in Längsrichtung erstreckenden, ebenen Laufbahn und zumindest einer parallel dazu verlaufenden, an zwei Stellen mittels je zweier Rampen höhenversetzten Laufbahn versehen ist, ferner eine diesen Gleitschuh im Querschnitt als umgekehrtes U übergreifende Haube, deren beide U-Schenkel-Enden ebenfalls zum Abstützen auf dem Boden ausgebildet sind und deren als U-Steg ausgebildete Oberseite zur Aufnahme der Befülleinrichtung ausgebildet ist, desweiteren die Haube an ihren beiden Enden je einen Rollenbock, dessen Rollen quer zu der Längsrichtung zwischen der zumindest einen ebenen und der zumindest einen höhenversetzten Laufbahn verschiebbar an der Haube festgelegt ist, und schliesslich einen Hubzylinder aufweist, dessen eines Ende an der Haube und dessen anderes Ende an dem Gleitschuh angreift.

Die Verschubeinrichtung gemäss der Erfindung werden zu Beginn des Bewegungszyklus mit aufgesetzer Befülleinrichtung als Last die Rollen der Rollenböcke zunächst so eingestellt, dass diese auf der zumindest einen ebenen Laufbahn laufen. Dabei stützt sich die gesamte Verschubeinrichtung über die beiden Schenkel der Haube auf dem Boden ab. Wird der daran mit seinem einen Ende festgelegte Hubzylinder ausgefahren, so stützt sich der unbelastete Gleitschuh daran ab und verschiebt sich gegenüber dem Boden und der Haube in Transportrichtung nach vorne. Ist der maximale Hub des Hubzylinders erreicht, so werden die Rollen der Rollenböcke so quer zur Transportrichtung verschoben, dass diese sich auf der zumindest einen höhenversetzten Laufbahn laufen. Selbstredend muss sichergestellt sein, dass sich in dieser Lage nicht die zwei Stellen der mittels der Rampen höhenversetzten Laufbahn befinden. Wird der Hubzylinder wieder eingezogen, so laufen die Rollen der seitwärts verschobenen Rollenböcke auf die Rampen auf und heben dabei die Haube nebst Last bis zum Ende der Rampe an, an die sich das parallel zu der ebenen Laufbahn verlaufende höhenversetzte Stück der höhenversetzten Laufbahn anschliesst. In diesem Bereich wird die Haube nicht weiter angehoben, aber in angehobenem Zustand in Transportrichtung bis zu der sich daran anschliessenden zweiten, nach abwärts gerichteten Rampe sowie längs dieser abwärts bewegt und dann unter Absetzen der Last auf dem Boden angehalten. In diesem Zustand steht auch die nachlaufende Rolle desselben Rollenbocks auf derselben Laufbahn an der zugehörigen ansteigenden Rampe an. Jetzt können die Rollensätze wieder quer zurückverschoben werden, so dass ein neuer Zyklus beginnen kann.

Die Erfindung besteht mit Vorteil nur aus wenigen notwendigen Teilen. Gleichwohl ist es möglich, selbst schwerste Lasten, also an sich bekannte Container jeglicher Grösse, ohne die Notwendigkeit diese umzubauen zu müssen, bewegt werden. Aufgrund der einfachen Ausbildung ist die Verschubeinrichtung gemäss der Erfindung einfacher, wirtschaftlicher sowie störunanfälliger im Betrieb.

Weitere zweckmässige Ausgestaltungen und Weiterbildungen der Erfindung sind in den Unteransprüchen gekennzeichnet.

Ein Auführungsbeispiel der Erfindung wird nachfolgend unter Bezugnahme auf die Zeichnung näher erläutert. In dieser zeigt:
- Figur 1: die Verschubeinrichtung, in schematischer Seitenansicht und Ausgangsstellung;
- Figur 1A: die Verschubeinrichtung nach Figur 1, in Vorderansicht;
- Figur 1B: einen Rollenbock in Vorderansicht als Sprengbild;
- Figur 1C: den Rollenbock nach Fig. 1B als Sprengbild in Seitenansicht;
- Figur 1D: einen Gleitschuh in Seitenansicht;
- Figur 1E: den Gleitschuh nach Fig. 1D in Vorderansicht;
- Figur 1F: eine Haube in Seitenansicht, als Sprengbild;
- Figur 1G: die Haube nach Figur 1F, in Vorderansicht als Sprengbild;
- Figur 2: die Verschubeinrichtung nach Figur 1 in schematischer Seitenansicht und einer Zwischenstellung;
- Figur 2A: die Verschubeinrichtung nach Figur 2, in Vorderansicht;
- Figur 3: die Verschubeinrichtung nach Figur 1 in schematischer Seitenansicht und einer weiteren Zwischenstellung;
- Figur 3A: die Verschubeinrichtung nach Figur 3, in Vorderansicht;
- Figur 4: die Verschubeinrichtung nach Figur 1 in schematischer Seitenansicht und einer Endstellung.

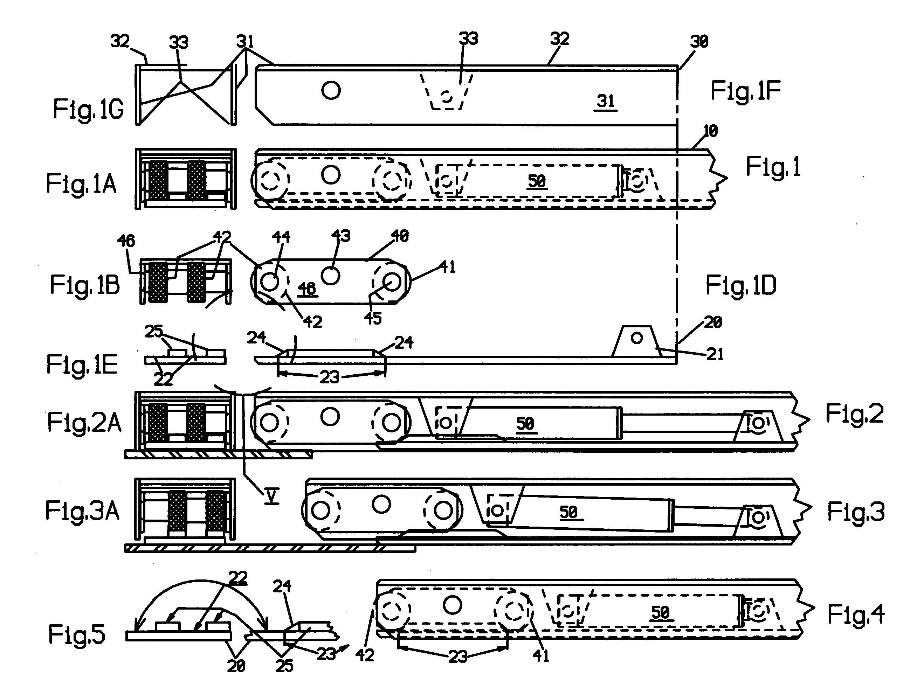

Die in Figur 1 insgesamt mit 10. bezeichente Verschubeinrichtung dient zum Transport von -nicht gezeigten- aufgesetzten Befülleinrichtungen wie Container od. dgl. und besteht im wesentlichen aus einem Gleitschuh 20 (Figur 1D,E), die auf ihrer Unterseite zum Abstützen auf dem Untergrund eben ausgebildet ist, aus einer diesen Gleitschuh im Querschnitt als umgekehrtes U übergreifenden Haube 30 (Figur 1F,G), deren Enden 33 der beiden U-Schenkel 31 ebenfalls zum Abstützen auf dem Boden ausgebidet sind und deren die beiden U-Schenkel 31 verbindender U-Steg 32 als Oberseite zur Aufnahme der Befülleinrichtung ausgebildet ist, aus einem Rollenbock 40, der über eine Achse 43 an den Innenseiten der beiden U-Schenkel 31 der Haube 30 schwenkbar gelagert ist und in parallel zu den U-Schenkeln 31 verlaufenden Wangen 46 mit zwei zueinander parallelen, Rollen 41,42 tragenden Bockachsen 44,45 versehen ist, und aus einem Hubzylinder 50, dessen eines Ende an der Haubenlasche 33 der Haube und dessen anderes Ende an der Gleitschuh-lasche 21 angreift.

Auf der Oberseite des Gleitschuhs 20 sind je zwei zueinander parallele Laufbahnen vorgesehen, und zwar je zwei ebene (22) und je zwei, an je zwei Stellen 23 mittels je zweier Rampen 24 höhenversetzten Laufbahn 25, die abwechselnd nebeneinander liegen.

Die Rollen 41,42 des Rollenbocks 40 lassen sich quer zur Längsrichtung (entspricht der Transportrichtung) von einer Stellung, in der sie nur auf den ebenen Laufbahnen 22 laufen (Figuren 1 und 2), zu einer zweiten Stellung, in der sie nur auf der mittels den Rampen 24 höhenversetzten Laufbahnen 25 laufen (Figuren 3 und 4), mittels eines aus Gründen der besseren Übersichtlichkeit nicht gezeigten Querantriebs verschieben.

Bei der Verschubeinrichtung 10 gemäss der Erfindung werden zu Beginn des Bewegungszyklus (Figur 1) mit aufgesetzer Befülleinrichtung als Last die Rollen 41,42 der Rollenböcke 40 zunächst so eingestellt, dass alle auf den zwei ebenen Laufbahn 22 laufen. Dabei stützt sich die gesamte Verschubeinrichtung 10 über die beiden U-Schenkel 31 der Haube 30 auf dem Boden ab. Wird der daran (33) mit seinem einen Ende festgelegte Hubzylinder 50 ausgefahren (Figur 2), so verschiebt sich der demgegenüber unbelastete Gleitschuh 20 gegenüber dem Boden und der Haube 30 in Transportrichtung nach vorne. Ist der maximale Hub des Hubzylinders 50 erreicht (FIgur 2), so werden die Rollen 41,42 der Rollenböcke 40 so quer zur Transportrichtung verschoben, dass diese auf den beiden höhenversetzten Laufbahnen 25 laufen (Figur 3). Selbstredend muss sichergestellt sein, dass sich in dieser Lage nicht die zwei Stellen 23 der mittels der Rampen 24 höhenversetzten Laufbahn befinden.

Wird der Hubzylinder 50 wieder eingezogen (Figur 4), so laufen die seitwärts verschobenen Rollen 41,42 der Rollenböcke auf die Rampen 24 auf und heben dabei die Haube 30 nebst Last bis zum Ende der Rampe 24 an, an die sich das parallel zu der ebenen Laufbahn 22 verlaufende höhenversetzte Stück 23 der höhenversetzten Laufbahn 25 anschliesst. In diesem Bereich wird die Haube 30 nicht weiter angehoben, aber in angehobenem Zustand in Transportrichtung bis zu der sich daran anschliessenden zweiten, nach abwärts gerichteten Rampe 24 sowie längs dieser abwärts bewegt und dann unter Absetzen der Last auf dem Boden angehalten. In diesem Zustand steht auch die vorauslaufende 41 als auch die nachlaufende Rolle 42 desselben Rollenbocks 40 auf derselben Laufbahn 25 an der zugehörigen ansteigenden Rampe 24 an. Jetzt können die Rollen 41,42 des Rollenbocks 40 wieder quer zurückverschoben werden, so dass ein neuer Zyklus beginnen kann.

Damit dieser Zyklus durchlaufen werden kann, dürfen die grössten Abstände (23) der beiden zueinander benachbarten Rampen 24 einer höhenversetzten Laufbahn 25 nicht grösser als der Abstand der vorlaufenden 41 sowie nachlaufenden Rolle 42 voneinander in derselben Laufbahn 22 oder 25 eines Rollenbocks 40 sein. Ebenso muss der Abstand der zwei an den beiden Enden der Haube 30 angeordneten Rollenböcke40 voneinander dem Abstand der zwei Stellen 23 mit den je zwei Rampen 24 höhenversetzten Laufbahn 25 an dem Gleitschuh 20 entsprechen.

## Patentansprüche

**1.** Verschubeinrichtung zum Transport von aufgesetzten Lasten, z.B. Befülleinrichtungen wie Container od. dgl., wobei sie einen Gleitschuh (20), der auf seiner Unterseite zum Abstützen eben ausgebildet und auf seiner Oberseite mit zumindest einer sich in Längsrichtung erstreckenden, ebenen Laufbahn (22) und zumindest einer parallel dazu verlaufenden, an zwei Stellen mittels je zweier Rampen (24) höhenversetzten Laufbahn (25) versehen ist, ferner eine diesen Gleitschuh (20) im Querschnitt als umgekehrtes U übergreifende Haube (30), deren beide U-Schenkel-Enden (31) ebenfalls zum Abstützen auf dem Boden ausgebildet sind und deren als U-Steg (32) ausgebildete Oberseite zur Aufnahme der Befülleinrichtung ausgebildet ist, desweiteren die Haube (30) an ihren beiden Enden je einen Rollenbock (40), dessen Rollen (41,42) quer zu der Längsrichtung zwischen der zumindest einen ebenen und der zumindest einen höhenversetzten Laufbahn verschiebbar an der Haube (30) festgelegt ist, und schliesslich einen Hubzylinder (50) aufweist, dessen eines Ende an der Haube (30) und dessen anderes Ende an dem Gleitschuh (20) angreift.

**2.** Verschubeinrichtung nach Anspruch 1, **dadurch gekennzeichnet, dass** die zwei Rollenböcke (40) mittels je eines Querantriebes quer zu ihrer Längsrichtung zwischen der zumindest einen ebenen und der zumindest einen höhenversetzten Laufbahn verschiebbar sind.

**3.** Verschubeinrichtung nach Anspruch 1 oder 2, **dadurch gekennzeichnet, dass** jeder Rollenbock (40) zwei Paare von nebeneinander auf derselben Achse angeordnete Rollen (41, 42) und der Gleitschuh (20) je zwei parallel und mit Abstand zueinander angeordnete ebene Laufbahnen sowie höhenversetzte Laufbahnen aufweist.

**5.** Verschubeinrichtung nach einem der vorhergehenden Ansprüche, **dadurch gekennzeichnet, dass** der Hubzylinder (50) als Hydraulikzylinder ausgebildet ist.

**6.** Verschubeinrichtung nach einem der vorhergehenden Ansprüche, **dadurch gekennzeichnet, dass** die Haube (30) gegenüber dem Gleitschuh (20) mittels eines Hebeantriebes anhebbar ausgebildet ist.

**7.** Verschubeinrichtung nach einem der vorhergehenden Ansprüche, **dadurch gekennzeichnet, dass** die grössten Abstände der beiden zueinander benachbarten Rampen (24) einer höhenversetzten Laufbahn nicht grösser als der Abstand der vorlaufenden sowie nachlaufenden Rolle voneinander in derselben Laufbahn eines Rollenbocks (40) ist.

**8.** Verschubeinrichtung nach einem der vorhergehenden Ansprüche, **dadurch gekennzeichnet, dass** der Abstand der zwei an den beiden Enden der Haube (30) angeordneten Rollenböcke (40) voneinander dem Abstand der zwei Stellen mit den je zwei Rampen (24) höhenversetzten Laufbahn des Gleitschuhs (20) entspricht.
